# EUROPEAN PATENT APPLICATION

(11) **EP 2 009 449 A1**
(43) Date of publication of application: **31.12.2008**
(21) Application number: 07011159.6
(22) Date of filing: 06.06.2007
(51) Int. Cl.: G01N 35/10, B01L 3/02

(54) **Method of controlling a pipetting process**

(71) Applicant: Hamilton Bonaduz AG, CH-7402 Bonaduz (CH)
(72) Inventor: Bentz, Markus, 7000 Chur (CH); Nay, Renato, 7425 Masein (CH); Oeltjen, Lars, Dr., 7000 Chur (CH)
(74) Representative: Trossin, Hans-Jürgen

(57) **Abstract**

A method of controlling a pipetting process for a liquid by the use of a pipetting device (10) is suggested, said pipetting process including a calibration process and a dosing process being performed in accordance with a set of process variables, wherein, before starting said dosing process for said liquid, said calibration process is carried out to determine said set of said process variables specifically for said liquid, said calibration process comprising the steps of: performing a preliminary dosing process for said liquid using a predefined reference set of said process variables, detecting a preliminary time characteristic (A') of at least one state variable (p) of a medium present in the pipetting device (10) during said preliminary dosing process, and comparing said detected preliminary time characteristic (A') of said state variable (p) with a reference time characteristic (A) of said state variable (p) obtained in advance by performing a dosing process for a predefined reference liquid using said reference set of process variables. In said calibration process according to said comparison between said preliminary time characteristic (A') of said state variable (p) with a reference time characteristic (A) of said state variable (p) a new set of process variables is created which is to be used for dosing said liquid specifically. Preferably, also the volume of liquid dosed in said preliminary dosing process and/or said dosing process is detected and compared with a target volume.

## Description

The present invention relates to a method of controlling a pipetting process according to the preamble of claim 1.

When pipetting liquids it is known that the process variables of the pipetting operation, e.g. the temporal characteristic of movement of a plunger of the pipetting device, the amount of gas aspirated before aspiration of liquid and after dispensation of liquid, etc. have a significant influence on the precision and accuracy of the amount of liquid pipetted. Since these process variables are influenced by the physical characteristics of the liquid to be pipetted, e.g. the surface tension, viscosity or vapour pressure of the liquid, the quality of a pipetting operation will be different for different liquids in case always one and the same set of process variables is used. Therefore, the problem arises to find for each liquid to be pipetted a specifically adapted set of process variables allowing a pipetting result of desired quality.

In case only known liquids are to be pipetted, a sufficient set of process variables for each liquid can be determined by a trial-and-error process and stored for later use. However, in case an unknown liquid is to be pipetted, this is not practical any more. In an automated pipetting system, this approach necessarily fails.

EP 1 745 851 A1 discloses a method of controlling a pipetting process including a process of dosing a liquid by the use of a pipetting device. The liquid dosing process is performed in accordance with at least one set of process variables. In case an unknown liquid is to be pipetted, before starting the dosing process for the (unknown) liquid, a calibration process is carried out in which a set of said process variables is determined specifically for the unknown liquid. Basically, in this calibration process, one of a plurality of predefined liquid classes is assigned to the unknown liquid.

The calibration process according to EP 1 745 851 A1 comprises the steps of performing a preliminary dosing process for the (unknown) liquid using a predefined reference set of the process variables, detecting a time characteristic of pressure within a space in the pipetting device during the preliminary dosing process, and comparing the detected time characteristic of pressure with a plurality of reference time characteristics of pressure obtained in advance using the same predefined reference set of process variables for a plurality of known reference liquids. For each of these reference liquids also a suitable set of the process variables has been determined in advance and is stored together with the respective reference time characteristic of pressure to form a respective liquid class.

For an unknown liquid, it is determined in said calibration process which of the pre-stored reference time characteristics of pressure is most similar to the preliminary time characteristic of pressure detected for the unknown liquid in the preliminary dosing process. The unknown liquid is then dosed in the "actual" dosing process using the set of most suitable process variables assigned to the reference liquid producing the most similar reference time characteristic, i.e. using the set of process variables assigned to the corresponding liquid class.

While this method allows the pipetting of unknown liquids, it has the drawback that for a number of reference liquids the corresponding most suitable set of process variables has to be found in advance in order to establish a sufficient amount of liquid classes. Considering the huge number of liquids that might become interesting for pipetting in different fields of practical use and the fact that the best set of process variables not only depends on the liquid to be pipetted, but also depends on the specific form of pipetting device to be used, it becomes clear that the approach shown in EP 1 745 851 is troublesome and therefore only has limited prospects of applicability.

The object solved by the present invention is therefore to provide a method of controlling a pipetting process for a liquid by the use of a pipetting device allowing sufficient accuracy and precision when dosing any unknown liquid without the need of large efforts hitherto necessary to provide a sufficient amount of reference liquid class es.

According to the invention, this object is solved by a method of controlling a pipetting process for a liquid by the use of a pipetting device, said pipetting process including a calibration process and a dosing process being performed in accordance with a set of process variables, wherein before starting said dosing process for said liquid, said calibration process is carried out to determine a set of said process variables specifically for said liquid, said calibration process comprising the steps of performing a preliminary dosing process for said liquid using a predefined reference set of said process variables, detecting a preliminary time characteristic of at least one state variable of a medium present in the pipetting device during said preliminary dosing process, and comparing said detected preliminary time characteristic of said state variable with a predefined reference time characteristic of said state variable obtained in advance by performing a dosing process for a reference liquid using said reference set of process variables, characterized in that in said calibration process according to said comparison between said preliminary time characteristic of said state variable with said predefined reference time characteristic of said state variable a new set of process variables is created which is to be used in said dosing process for said liquid specifically.

Determining the set of process variables specifically for said liquid to be pipetted is intended to determine a set of process variables to be used in said dosing process specifically for any liquid using a specific arrangement of pipetting device, target amount of liquid and environmental conditions that may influence the dosing process. Particularly it is considered that aspects like the pipetting mode or the specific geometry of the pipette and pipette tip may lead to different sets of process variables to be used in said dosing process, even if a same liquid is to be pipetted.

The pre-defined reference set of process variables is assigned to the reference liquid as a set of process variables to be used when dosing the reference liquid using the specific pipetting arrangement. Therefore the reference liquid and its pre-defined set of processing variables can be regarded as one liquid class. As in the method according to the invention for all other liquids the respective sets of process variables to be used will be determined by comparison with one and the same pre-defined liquid class , only one liquid class has to be established in advance.

The reference liquid can be chosen freely according to the specific circumstances or applications considered as relevant. The more similar the physical characteristics of the reference liquid will be to the physical characteristics of the (unknown) liquids to be dosed in a pipetting process, the closer will be the respective sets of process variables to be used for those liquids to the reference set of process variables assigned to the reference liquid. This will improve accuracy and simplify the calibration procedure. Similar considerations apply to the specific form of pipetting, volume of liquid to be pipetted etc. Of course,it will be advantageous to use as a reference liquid a liquid for which the most relevant physical parameters, e.g. surface tension, viscosity, or vapour pressure are well known, since these parameters can already give hints for the values to be chosen for the process variables forming the reference set of process variables in pipetting the chosen reference liquid. In case a set of process variables to be used for a reference is already known, i.e. a liquid class corresponding to the reference liquid has already been established, no further experiments will be necessary, but rather the known liquid class can be adopted.

The state variable may be any physically detectable variable being influenced by said process variables included in the set of process variables. An example for a state variable the time characteristic of which may be detected easily during the pipetting process is the pressure inside the pipetting device. Pressure monitoring during a pipetting process not including a calibration process is carried out for various purposes in a number of pipetting applications, e.g. to discard irregular pipetting processes (see EP 1 412 759 B1) or to provide fully automatic control of the pipetting process (see EP 1 614 468 A1). It is referred to these documents for possible arrangements of a pressure sensor in fluid communication with the pipetting volume which can be applied also to the present invention.

The set of process variables includes at least one process variable. In most applications a number of different process variables will have an influence on the result of the dosing process, such that the set of process variables includes more than one process variable. The set of process variables may e.g. include the following: speed of plunger during aspiration/dispensation (flow rate), amount of gas aspirated before aspiration of liquid and dispensed again in total or partly immediately after dispensation of liquid (blowout volume), amount of gas aspirated after aspiration of liquid and after dispensation of liquid, well above the liquid (air transport volume), speed of the pipette moving out of the liquid after aspiration and after dispensation (swap speed), waiting time of the pipette after plunger movement during aspiration and dispensation (settling time), additionally aspirated liquid volume which is dispensed again immediately during aspiration (over-aspirate volume), speed of plunger during dispensation at which the plunger movement stops abruptly (stop flow rate), amount of fluid (this can be liquid, gas, or even both) aspirated immediately after dispensation of liquid (stop back volume).

Preferably the time characteristic of the state variable is detected essentially over the entire duration of the dosing process or/and the preliminary dosing process.

To create a new liquid class said new set of process variables created in said calibration process may be stored in assignment to said preliminary time characteristic of said-state variable obtained in said calibration process for said liquid using said predefined reference set of process variables. Thus, for each unknown liquid to be pipetted, a corresponding new liquid class will be produced. A calibration system using the method according to this preferable embodiment of the invention hence will be able to develop an own classification of different liquid classes which is specifically adapted to the liquids of relevance of a specific user. In case a number of liquid classes have already been established, it might of course be advantageous to compare the preliminary time characteristic of the state variable obtained during the calibration process with the respective preliminary time characteristics stored, and to use the process variables of a liquid class already stored in case similarity of the preliminary time characteristics is found.

The new liquid class created in the calibration process may be stored together with the density or/and viscosity of said liquid. When using the new liquid class as a reference for liquids to be pipetted in the future, this information may help to determine, whether the unknown liquid might have similar characteristics as the respective class of liquids.

To improve accuracy of any set of process variables used or even new liquid classes stored, said calibration process may be repeated a plurality of times using the same liquid. The set of process variables to be used in the dosing process for said liquid is then determined based on the results of said plurality of calibration processes, e.g. by re-iteration of the calibration process multiple times always using the process variables and preliminary time characteristic obtained in a calibration process as the new reference process variables and new reference time characteristic in the following calibration process. Alternatively, the same reference set of process variables can be used in all said consecutive calibration processes and the new set of process variables may be obtained by calculating a respective average value from the independent calibration processes. As an example, the calibration process may be repeated up tot 8 times, each time using a new pipette tip of the same type.

For quantitatively analysing the time characteristic of the state variable, advantageously at least one characteristic quantity may be calculated from said preliminary time characteristic of said at least one state variable detected using said reference set of process variables during said calibration process. In this case in the calibration process the value of said at least one characteristic quantity calculated for said detected preliminary time characteristic of said at least one state variable may be compared with a value calculated for the corresponding characteristic quantity of said reference time characteristic of said state variable. Thus not the preliminary time characteristic and the reference time characteristic as whole are used for comparison, but only a part therefrom, from which it is to be expected to reveal particularly significantly any difference in the physical characteristic of different liquids.

For example, the at least one characteristic quantity may the slope of said time characteristic of said at least one state variable at a portion where said time characteristic suddenly drops following aspiration movement of the plunger of said pipetting device, but without any substantial flow of liquid into the tip of said pipetting device. This slope will be strongly affected by changes in the surface tension and/or viscosity of the liquid to be dosed.

Alternatively or additionally, the at least one characteristic quantity may be the slope of said time characteristic of said at least one state variable at a portion where the time characteristic suddenly increases following stop of the aspiration movement of the plunger of said pipetting device, when still liquid is flowing into the tip of said pipetting device. This slope is usually affected by the viscosity of the liquid to be dosed.

Further, the at least one characteristic quantity may be the value of said state variable at the beginning of movement of the plunger of said pipetting device which, in case of the pressure inside the pipette tip being said state variable, is influenced by the vapour pressure of the liquid to be pipetted.

Another feasible characteristic quantity may be the value of said state variable at the time of starting of the flow of liquid into the tip of said pipetting device. This time is marked in said time characteristic of said state variable, e.g. of the pressure inside the pipetting device, as a change in slope from an initially rapidly decreasing pressure with time to a slightly increasing pressure with time. The value of the pressure at this transition is influenced by the surface tension and the vapour pressure of the liquid.

Further, the at least one characteristic quantity may also be the value of said state variable at the time of ending of the flow of liquid into the tip of said pipetting device, which in case of the pressure inside the pipette tip being said state variable, is also influenced by the vapour pressure of the liquid.

There are known a number of general rules relating to the interdependency of specific process variables and specific physical parameters of liquids to be pipetted. E.g. the larger the vapour pressure of a liquid is, the larger is the pressure inside the pipette tip when liquids starts to flow into the pipette tip and when liquid flow into the pipette tip stops. The larger the surface tension and the viscosity of a liquid is, the lower is the pressure inside the pipette tip at the time the liquid starts flowing into the pipette tip and the larger is the absolute value of the slope of the time characteristics of pressure when the plunger moves without any flow of liquid taking place yet. As a further general rule, the larger the viscosity of a liquid is, the smaller is generally the slope of the time characteristics of pressure when the movement of the plunger has stopped, but the flow of liquid is still continuing. However, all these general rules are of a more qualitative nature, and therefore, despite the fact that they seem quite intuitive, are difficult to evaluate quantitatively for calculating differences in process variables to be applied when liquids having differing physical characteristics are to be dosed using a pipetting device.

In a preferred embodiment of the invention for calculating said set of process variables to be used for dosing a specific (usually unknown) liquid a difference between the value of said characteristic quantity of said preliminary time characteristic and the value of said characteristic quantity of said reference time characteristic is calculated. Either ones (or even all) of the characteristic quantities specified above, or even other ones, may be chosen for this purpose. Using the differences between each of the above five specified quantities has shown to allow a quite straightforward mathematical implementation, as the differences may be calculated separately for each of the quantities from the respective time characteristics of the state variable, and the interdependency between specific physical characteristics of the liquids on the process variables can be expressed conveniently in a Matrix equation using these differences as components of an input vector (the number of components of the input being chosen in any suitable manner). Given a specific correlation matrix is specified, the process variables or changes to be applied to given process variables with respect to a reference liquid class can be obtained by simple matrix multiplication.

The matrix calculation procedure specified above might not only be applicable in case differences between characteristic quantities are used as input variables. Rather a mathematical correlation technique as outlined may in general be used a powerful tool to assign to an input vector the components of which represent the result of the comparison between the value of a respective characteristic quantity of the preliminary time characteristic and of the reference time characteristic a corresponding target vector the components of which represent said process variables to be determined. The input vector will be multiplied by a correlation matrix, the coefficients of which represent the transformation from a starting/reference set of process variables (used for detecting the preliminary time characteristic of said state variable) to an optimized set of process variables under the given respective circumstances like liquid to be pipetted, geometry of the pipetting device and volume to be pipetted.

It will be advantageous, if a step of validation of said new set of process variables created in said calibration process is carried out, in which step of validation the dosing process is repeated for said liquid while using said newly created set of process variables. In the validation step the volume or/and weight of said liquid dispensed is detected, and in case the difference between the detected volume or/and weight of said liquid dispensed and a target volume or/and target weight of the liquid to be dispensed is larger than a predetermined threshold an additional preliminary dosing process is carried out for obtaining a further modified set of process variables. The additional preliminary dosing process may be repeated several times, until either said step of validation results in said difference between the detected volume or/and weight of said liquid dispensed and the target volume or/and target weight of the liquid to be dispensed being smaller than or equal to said predetermined threshold or a maximum number of further dosing processes is reached. The further dosing processes may e.g. be simple trial-and-error-processes in which it is aimed to improve the dosing result relying on simple qualitative rules as outlined above. In most cases, it turned out that already the first preliminary dosing process using said preliminary time characteristic of said state variable and said reference time characteristic of said state variable leads to acceptable results.

As already indicated, it might be optional possible to compare said preliminary time characteristic of said state variable with any of the preliminary time characteristics of said state variable stored, and in case said comparison reveals a similarity or equivalence with any of the stored preliminary time characteristics, to perform the dosing process for said liquid using the process variables assigned to that stored preliminary time characteristic.

For discarding unsuccessful calibrations, e.g. due to clots or the like, it might be useful to report an error in case the detected time characteristic of said state variable during any of the dosing processes exceeds predetermined upper and lower tolerance bands assigned to said reference time characteristic of said state variable and indicating respective thresholds for an acceptable range for said set of process variables in said dosing process. Such a control has been known for dosing processes of liquids in general, as outlined e.g. in EP 1 412 759 B1 to which it is referred.

Usually, said dosing process will be a pipetting process comprising an aspiration and a dispensation step, wherein preferably a transport step is carried out after said aspiration step and before said dispensation step. The medium the state variable of which is detected may be a gas, preferably air, with which a container of said pipetting device is filled at least partially. The state variable may preferable be the pressure of said medium inside the pipetting device which is detectable easily. Pressure detection of a medium inside the pipetting device is applied already in the context of having the possibility to monitor the dosing process and discard irregular pipetting processes (see e.g. the above cited EP 1 412 759 B1). Alternatively, the state variable could be the flow and/or the temperature of said medium.

The invention also relates to a controlling unit of a pipetting device, for controlling a pipetting process for a liquid by the use of said pipetting device, said controlling unit being adapted to perform a controlling method as described before. Further the invention is intended to relate to a pipetting device comprising such a controlling unit.

The invention will be described further by a specific embodiment while taking reference to the appended drawings. These show:
- Fig. 1: a schematic and strongly simplified representation of a pipetting device;
- Fig. 2: a schematic and strongly simplified representation of a time characteristic of pressure measured inside a pipetting volume of the pipetting device;
- Fig. 3: an example of a time characteristic of pressure measured inside the pipetting volume for a reference liquid using the corresponding set of suitable process variable assigned thereto and a same time characteristic of pressure measured inside the pipetting volume for another liquid using the same set of suitable process variables assigned to the reference liquid; and
- Fig. 4: an example of a time characteristic of pressure measured inside the pipetting volume according to Fig. 3, however for the other liquid using an optimized set of process variables determined in a calibration process according to the invention.

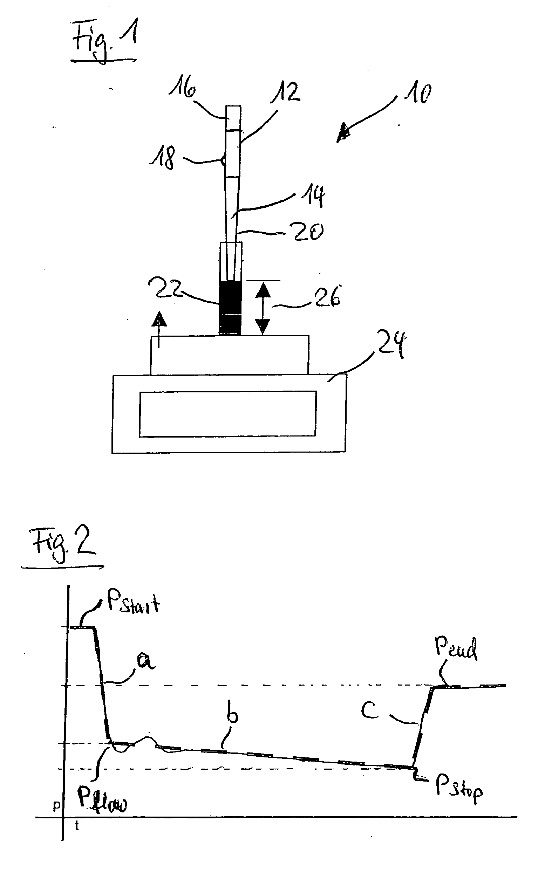

Fig. 1 discloses a pipetting device 10 which is part of an automatic pipetting assembly (not shown) providing fully automatized pipetting of liquids. The pipetting device 10 comprises a pipette body 12 which is movable by a corresponding actuating member (not shown) of the pipetting assembly to move the pipette body 12 in transversal and vertical direction between different operating locations. The pipette body 12 encloses a pipetting volume 14 and a plunger 16 movable inside the pipette body 12 in axial direction to increase or diminish the pipetting volume 14. In fluid connection with the pipettingvolume 14 is mounted a pressure sensor schematically indicated at 18 in Fig. 1. The front end of the pipetting volume 14 (in Fig. 1 the downward end) is formed by a pipette tip 20 which is disconnectable from the pipette body 12. In operation, the plunger 16 is moved in axial direction by a drive mechanism (not shown). The pressure signal detected by the pressure sensor 18 is transmitted to a control unit (not shown) which evaluates the pressure signal and also provides control of the drive of the plunger 16 relative to the pipette body 12 and the drive of the pipetting assembly controlling movements of the pipette body 12 as a whole.

The pipetting device 10 is controlled fully automatically for pipetting an unknown liquid.

In the first step of the fully automatically controlled pipetting process of an unknown liquid a calibration process is carried out in which a preliminary time characteristic of pressure is determined specifically for the liquid to be pipetted, type of pipetting tip 20 used, pipetting mode to be carried out and volume of liquid that is to be pipetted. This is done by recording the time characteristic of pressure inside the pipetting volume 14 using the pressure sensor 18 during a preliminary dosing process including aspiration of the liquid from one container (not disclosed)placed on a balance and the following dispensation of the liquid into another container 22 also placed on a balance 24. This calibration process is carried out according to a pre-defined set of reference pipetting variables.

The set of pipetting variables controls the dosing process carried out by the pipetting device, e.g. determines the speed of movement of the plunger 16 (see the list of possible process variables above). This set of pipetting or process variables is optimized for a reference liquid with well established values of its physical properties, like density and viscosity (e.g. in the example described later, water is used as a reference liquid), thus yielding a reference set of pipetting variables. The reference time characteristic of pressure inside the pipetting volume 14 for the reference liquid is recorded in advance in a dosing process using the reference set of pipetting variables for that reference liquid. Then this reference time characteristic is stored in a database for use in future pre-pipetting (i.e. essentially calibration) steps.

When carrying out the calibration process for dosing an unknown liquid a preliminary time characteristic of pressure inside the pipetting volume 14 is detected during a preliminary dosing process carried out using the reference set of process variables.

The liquid height (see arrow 26 in Fig. 1) in the container (not shown) from which liquid is sampled and the liquid height of the container 22 into which liquid is dispensed, both containers being placed on a respective balance (in Fig. 1 only the balance 24 of the dispensing container 22 is shown), is determined by pressure and capacitive liquid level detection. The dispensed volume of liquid is then calculated using the known geometry of the containers. Together with the weight determined by the balances the density of the unknown liquid can be determined. This density is stored together with the preliminary time characteristic of pressure measured in the calibration process for the unknown liquid using the process variables of the reference liquid. The container 22 on balance 24 will be automatically replaced by a new empty one after each use.

The time characteristic of pressure inside the pipetting volume 14 recorded during aspiration/dispensation of a liquid is the result of the movements of the plunger 16 and the response of the aspirated/dispensed liquid to this movement, the liquid flow. The characteristics of this behaviour will be described qualitatively with reference to Fig. 2 showing a typical time characteristic of pressure inside the pipetting volume during aspiration (the dashed line representing an idealized profile, the solid representing a measured profile). During aspiration first a steep decrease in pressure is obtained, namely from the pressure value *pₛᵣₐₙat* the beginning of the movement of the plunger to the value *p_{flow}* when liquid starts flowing into the pipetting volume. In this phase the movement of the plunger 16 starts to increase the pipetting volume 14, but the liquid will follow the movement of the plunger 16 only with delay. This creates a negative pressure with a strong decrease in slope *a* of pressure with time. As soon as (at pressure *P_{flow}*) the liquid starts flowing into the pipetting volume 14, the slope b of the decrease of pressure becomes much smaller. When the movement of the plunger 16 stops again (indicated at *pₛₜₒₚ* in Fig. 2), the flow of liquid again reacts with delay resulting in a following steep increase in pressure (see slope c of the pressure characteristic in Fig. 2), until at the end of the aspiration process (i.e. when no further liquid is aspired), the pressure in the pipetting volume reaches a final pressure *p_{end}.*

Basically, a liquid's response to the movements of the plunger 16 is determined mainly by the viscosity of the liquid. During the initial part of the movement of the plunger 16, when no liquid is flowing yet, the surface tension of the liquid will further affect the start of the liquid flow and thus the time characteristics of pressure in the pipetting volume 14. Later, when liquid is flowing, the viscosity of the liquid will determine to a large extent flow behaviour of the liquid. The viscosity of the liquid determines the minimum/maximum pressure value which is reached during aspiration/dispensation. The lower the viscosity, the faster is the response of the liquid to the movement of the plunger. This leads for a liquid having a lower viscosity than the reference liquid to a less pronounced pressure minimum upon aspiration compared to the reference liquid with higher viscosity. The opposite, a more pronounced pressure minimum is observable for a liquid having a higher viscosity compared to the reference liquid. Thus from the time characteristic of pressure measured when an unknown liquid is dosed using process variables assigned to a reference liquid different from the (unknown) liquid, it is possible to obtain information about physical parameters like the viscosity of the (unknown) liquid relative to the reference liquid for which the process variables were optimized.

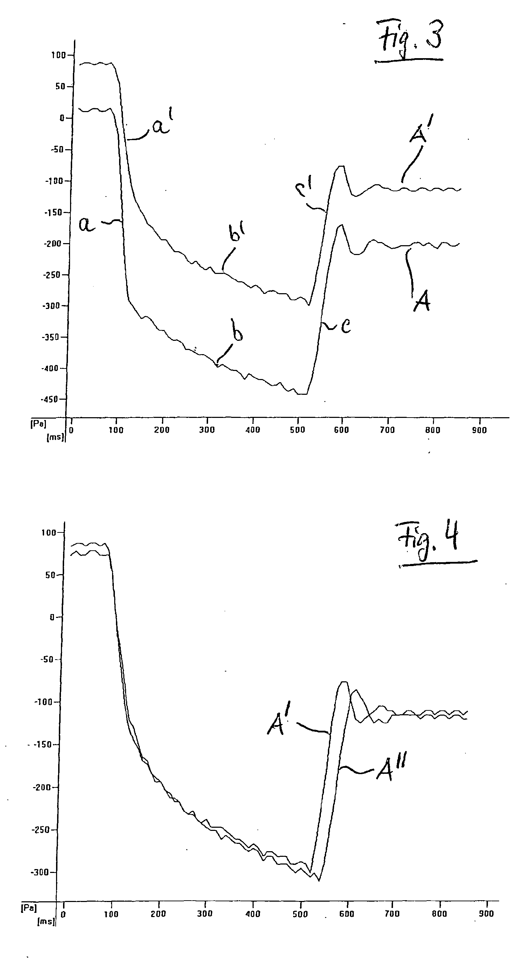

Fig. 3 discloses two time characteristic curves of pressure inside the pipetting volume 14 during dosing processes carried out for two different liquids, but using the same set of process variables in both dosing processes. Curve A in Fig. 3 represents the time characteristic of pressure for a reference liquid, in this case water. This reference time characteristic was obtained by aspiration of 100 µl of water using a set of process variables producing optimum pipetting results when pipetting water. The reference time characteristic A shown in Fig. 3 shows the typical behaviour outlined above with respect to Fig. 2, with characteristic quantities *a, b,* c, *pₛₜₐᵣₜ, p_{flow}, p_{end}.* Fig. 3 further shows a second time characteristic curve A' obtained in a separate dosing process using the same reference set of process variables, but for another liquid (100 µl of ethanol in this case). Thus, the same liquid class assigned to water as a liquid to be dosed was applied to a process of dosing ethanol.

It-is evident that the time characteristic curve A' for ethanol differs from the corresponding time characteristic curve A for the reference liquid. The most remarkable difference between curve A and curve A' is the larger pressures of curve A' which is due to the much larger vapour pressure of ethanol compared to water. However, there are further differences, e.g. the decreasing slope a' for the curve A' (ethanol) is less than the corresponding slope *a* of curve A (water) and for curve A' (ethanol) the transition from the steep slope *a*' to the smaller slope b' is less pronounced than for curve A.

When comparing the result of the dosing process carried out for water according to the reference time characteristic A and the result of the dosing process carried out for ethanol accordance to the time characteristic A', it turns out that in case of ethanol the dosed volume tends to differ more from the desired volume to be dosed than in case of water. Thus, for ethanol the accuracy of the dosed volume is worse than for water, in case for both liquids the same liquid class assigned to water is applied (namely the pipetting is carried out according to the reference set of process variables optimized for water).

In Fig. 4 two further curves representing time characteristics of pressure during the aspiration step of a dosing process are shown. Curve A' corresponds to curve A' of Fig. 3. Curve A" is a time characteristic of pressure obtained for 100 µl ethanol as liquid to be dosed during aspiration using a set of process variables obtained in a calibration procedure according to the invention. In this calibration process, first in a preliminary dosing process the time characteristic curve A' was detected for ethanol using the reference set of process variables. Then the characteristic quantities *a', c', p'ₛₜₐᵣₜ, p'_{flow}, p'_{end}* were calculated from the curve A'. Each of these characteristic quantities *a', c', p'ₛₜₐᵣₜ, p'_{flow}, p'_{end}* was compared to the corresponding characteristic quantity *a, c, pₛₜₐᵣₜ, p_{flow}, p_{end}* of the time characteristic curve A obtained for the reference liquid water in advance and stored, and a respective difference *a'-* a, c' *- c, p'ₛₜₐᵣₜ-Pₛₜₐᵣₜ, p'_{flow}-p_{flow}, P'_{end}-P_{end}* was calculated. These differences were inserted into a matrix equation in which an input vector is multiplied by a correlation matrix to obtain an output vector. The differences form the components of the input vector. The correlation matrix was determined in advance. As components of the target vector values of optimized process variables to be used'for pipetting of ethanol were obtained. The set of these optimized process variables was then used in a further process of dosing 100 µl of ethanol to produce the time characteristic curve A". In this dosing process a significantly better agreement of the volume of liquid actually pipetted with the desired volume of liquid to be pipetted was found.

Thereafter, the set of process variables used in the pipetting process according to curve A" were stored together with the time characteristic curve A' for ethanol using the reference process variables and the density of ethanol as a new liquid class assigned to ethanol. This liquid class will in future pipetting processes be used for pipetting of liquids which produce in a preliminary dosing process using the reference set of process variables a time characteristic that reveals curve A' in Fig. 3 and 4.

According to the given information, namely liquid density, relative liquid viscosity, and dispensed volume, the process variables are to be adjusted such as to give the correct target volume. This is achieved by the calibration process described before. An additional dosing process subsequent to the calibration process onto the balance 24 is then done for validation purposes. If a specified range around the target volume (which is checked using the balance 24 and the known geometry of the container 22) is reached, the process variables obtained during the calibration process are taken for the following dosing processes performed for the liquid. If the dispensed volume is still outside the specified range around the target volume, the process variables are modified again and the result is validated, until satisfactory results are achieved.

At the end of this pre-pipetting step including the calibration and the validation processes, the result is an optimized set of process variables and a time characteristic of pressure for the aspiration and dispensation step during the actual dosing process to be performed thereafter. This information is stored in a database, together with the preliminary time characteristic of pressure detected and recorded during the calibration step and the density of the liquid. Storing the optimum time characteristics of pressure in the pipetting volume during pipetting for the liquid to be pipetted allows to create tolerance bands for a TADM-controlling as described in EP 1 412 759 B1, which correspond to the acceptable pressure range for aspiration and dispensation, around the time characteristics pressure curve specifically adapted to the liquid to be pipetted and the specific circumstances of the pipetting process, like pipetting volume, geometry of pipetting tip, etc. Afterwards these bands are used during aspiration and dispense of the "real" pipetting of the liquid to monitor the pressure.

Every newly recorded preliminary time characteristic of pressure for an unknown liquid may be compared to the ones recorded earlier and stored in the database. If the time characteristic of pressure newly recorded for a liquid and the density determined for that liquid correspond to an existing entry in the database, further determination of pipetting variables in a specific calibration process will not be necessary. Rather, the corresponding pipetting variables and the time characteristic of pressure stored in the database will be used for the following pipetting.

For an unknown liquid to be dosed using a pipetting device, the "optimized" set of process variables as obtained during the calibration process outlined above or obtained from the database is used.

## Claims

1. Method of controlling a pipetting process for a liquid by the use of a pipetting device (10), said pipetting process including a calibration process and a dosing process being performed in accordance with a set of process variables,
wherein, before starting said dosing process for said liquid, said calibration process is carried out to determine said set of said process variables specifically for said liquid, said calibration process comprising the steps of:
performing a preliminary dosing process for said liquid using a predefined reference set of said process variables,
detecting a preliminary time characteristic (A') of at least one state variable (p) of a medium present in the pipetting device (10) during said preliminary dosing process, and
comparing said detected preliminary time characteristic (A') of said state variable (p) with a reference time characteristic (A) of said state variable (p) obtained in advance by performing a dosing process for a predefined reference liquid using said reference set of process variables,
**characterized in that**
in said calibration process according to said comparison between said preliminary time characteristic (A') of said state variable (p) with a reference time characteristic (A) of said state variable (p) a new set of process variables is created which is to be used in said dosing process for said liquid specifically.

2. Method according to claim 1, wherein to create a new liquid class said new set of process variables created in said calibration process is stored in assignment to said preliminary time characteristic (A') of said state variable (p) obtained in said calibration process for said liquid using said predefined set of reference process variables.

3. Method according to claim 2, wherein said new liquid class is stored together with the density or/and viscosity of said liquid.

4. Method according to any of claims 1 to 3, wherein said calibration process is repeated a plurality of times using the same liquid, and said set of process variables to be used in said dosing process for said liquid is determined based on the results of said plurality of calibration processes.

5. Method according to any of claims 1 to 4, wherein
at least one characteristic quantity (*a',* c', *p'ₛₜₐᵣₜ, p'_{flow}, p'_{end}*) is calculated from said preliminary time characteristic (A') of said at least one state variable (p) detected using said reference set of process variables during said calibration process, wherein in the calibration process the value of said at least one characteristic quantity (*a*', *c', p'ₛₜₐᵣₜ, P'_{flow}, p'_{end}*) calculated for said detected preliminary time characteristic (A') of said at least one state variable (p) is compared with a value calculated for the corresponding characteristic quantity (*a, c, pₛₜₐᵣₜ, p_{flow}, p_{end}*) of said reference time characteristic (A) of said state variable (p).

6. Method according to claim 5, wherein
said at least one characteristic quantity is the slope (*a,a'*) of said time characteristic (A, A') of said at least one state variable (p) at a portion where the time characteristic suddenly drops following aspiration movement of the plunger (16) of said pipetting device (10), but without any substantial flow of liquid into the tip of said pipetting device (10).

7. Method according to claim 5 or 6, wherein said at least one characteristic quantity is the slope (*c, c'*) of said time characteristic (A, A') of said at least one state variable (p) at a portion where the time characteristic suddenly increases following stop of the aspiration movement of the plunger (16) of said pipetting device (10), when still liquid is flowing into the tip of said pipetting device (10).

8. Method according to any of claims 5 to 7, wherein said at least one characteristic quantity (*pₛᵣₐᵣₜ, p'ₛₜₐᵣₜ*) is the value of said state variable (p) at the beginning of movement of the plunger (16) of said pipetting device (10).

9. Method according to any of claims 5 to 8, wherein said at least one characteristic quantity (*P_{flow}*, *p'_{flow}*) is the value of said state variable (p) at the time of starting of the flow of liquid into the tip of said pipetting device (10).

10. Method according to any of claims 5 to 9, wherein said at least one characteristic quantity (*p_{end}, p'_{end}*) is the value of said state variable (p) at the time of ending of the flow of liquid into the tip of said pipetting device (10).

11. Method according to any of claims 5 to 10, wherein for calculating said set of process variables to be used for dosing said liquid a difference between the value of said characteristic quantity (*a', c', p'ₛₜₐᵣₜ, p'_{flow}, p'_{end})* of said preliminary time characteristic (A') and the value of said characteristic quantity (*a,* c, *pₛₜₐᵣₜ, p_{flow}, p_{end}*) of said reference time characteristic (A) is calculated.

12. Method according to any of claims 5 to 11, wherein a mathematical correlation technique is used to assign to an input vector the components of which represent the result of the comparison between the value of a respective characteristic quantity (*a', c', p'ₛᵣₐᵣₜ, p'_{flow}, p'_{end}, a, c, pₛₜₐᵣₜ, p_{flow}, p_{end}*) of the preliminary time characteristic (A') and of the reference time characteristic (A) a corresponding target vector the components of which represent said process variables to be determined.

13. Method according to any of claims 1 to 12, wherein a step of validation of said new set of process variables created in said calibration process is carried out, in which step of validation said dosing process is repeated for said liquid while using said newly created set of process variables, the volume or/and weight of said liquid dispensed is detected, and in case the difference between said detected volume or/and weight of said liquid dispensed and a target volume or/and target weight of said liquid to be dispensed is larger than a predetermined threshold a further calibration process is carried out for obtaining a further modified set of process variables.

14. Method according to claim 13, wherein said additional calibration process is repeated several times until either said step of validation results in said difference between said detected volume or/and weight of said liquid dispensed and said target volume or/and target weight of said liquid to be dispensed being smaller than or equal to said predetermined threshold or a maximum number of further calibrations steps is reached.

15. Method according to any of claims 2 to 14, wherein
said preliminary time characteristic (A') of said state variable (p) is compared with any of said preliminary time characteristics (A') of said state variable (p) stored, and
in case said comparison reveals a similarity or equivalence with any of said stored preliminary time characteristics (A"), said dosing process for said liquid is performed using the set of process variables assigned to that stored preliminary time characteristic.

16. Method according to claim 10 or 11, wherein an error is reported, in case said detected time characteristic (A, A', A") of said state variable (p) exceeds predetermined upper and lower tolerance bands assigned to said reference time characteristic (A, A' A") of said state variable (p) and indicating respective thresholds for an acceptable range for said at least one process variable (p) in said dosing process.

17. Method according to any of claims 1 to 16, wherein said medium is a gas, preferably air, with which a container of said pipetting device (10) is filled at least partially.

18. Method according to any of claims 1 to 17, wherein said state variable is the pressure (p) of said medium.

19. Controlling unit of a pipetting device (10), for controlling a dosing process for a liquid by the use of said pipetting device (10), said controlling unit adapted to perform a controlling method according to any of the preceding claims.

20. Pipetting device (10) comprising a controlling unit according to claim 19.
